# EUROPEAN PATENT APPLICATION

(11) **EP 2 484 885 A1**
(43) Date of publication of application: **08.08.2012**
(21) Application number: 11153407.9
(22) Date of filing: 04.02.2011
(51) Int. Cl.: F02D 41/20, F02D 41/00, F02D 13/02, F02D 13/06, F02D 41/26, F02D 41/22

(54) **A device and a method to reduce a power dissipation of an electronic control unit used in an internal combustion engine**

(71) Applicant: Robert Bosch GmbH, 70442 Stuttgart (DE)
(72) Inventor: Montvay, Andras, 70806 Kornwestheim (DE)

(57) **Abstract**

A device and method to reduce a power dissipation of an electronic control unit ECU (100) is disclosed. The ECU (100) controls an intake valve (301) or an exhaust valve (302) of an internal combustion engine (300) by an electro hydraulic system (202,203). If a temperature of the ECU (100) gets too high, different electric current patterns can be used for controlling the intake valve (301) or the exhaust valve (302), which generate less power dissipation in the ECU (100).

## Description

### State of the Art

The present invention relates to a device and method to reduce a power dissipation of an electronic control unit (ECU) in an internal combustion engine comprising at least one cylinder and at least one intake or exhaust valve associated to the cylinder and actuated by means of an electro-hydraulic system. The electro-hydraulic system is controlled by a solenoid valve for variable actuation of the intake valve or exhaust valve. In general this invention is applicable to any kind of system where solenoid valve is used to control the intake valve or exhaust valve.

There are different types of methods available to reduce power dissipation in the whole range of engine operation. The patent US 5611303 discloses such a method for internal combustion engine.

### Advantages of the invention

Solenoid valves are used in a system for controlling determination of air or fuel in an internal combustion engine. These solenoid valves must be operated in each engine cycle. The duration of the activation depends on the required air mass or fuel quantity. The resulting loss of power makes much of the loss of power from an electronic control unit and may in certain operating areas result in thermal problems and makes an increased effort needed to cool the temperature. An electronic control unit and a method according to the independent claims have the advantages that, by controlling an electrical current pattern to the solenoid valves power dissipation can be reduced, thereby reducing the thermal problems.

Eliminating unnecessary power dissipation in solenoid coils saves power, improves valve performance, and extends valve operating life.

The power dissipation is directly proportional to the square of the current. By reducing the current level in the solenoid valve, the power dissipation can be reduced significantly.

Further by controlling a lift profile of the intake or exhaust valves the power loss can be reduced. The intake valve profile can be varied by regulating an electro hydraulic drive mechanism. By maintaining the similar combustion chamber conditions in a cylinder of the internal combustion with the modified lift profile, a significant reduction of power loss can be achieved.

The saved power loss can be used in the interpretation of the controller to reduce in one or more of the following parameters:
- Smaller housing size can be used
- Temperature sensor can be saved
- Cooling concept of the controller can be made simpler

### BRIEF DESCRIPTION OF THE DRAWINGS

- Fig. 1: shows a block diagram comprising an electronic control unit.
- Fig. 2: shows electric current flow pattern in a solenoid valve.
- Fig. 3 and Fig. 4: shows embodiments how power dissipation can be re-duced without changing a valve lift of the intake or ex-haust valve.
- Fig. 5 to Fig. 8: shows embodiments how power dissipation can be reduced by modifying the valve lift of the intake or exhaust valve but maintaining the same air filling in a cylinder.

### DETAILED DESCRIPTION OF THE INVENTION

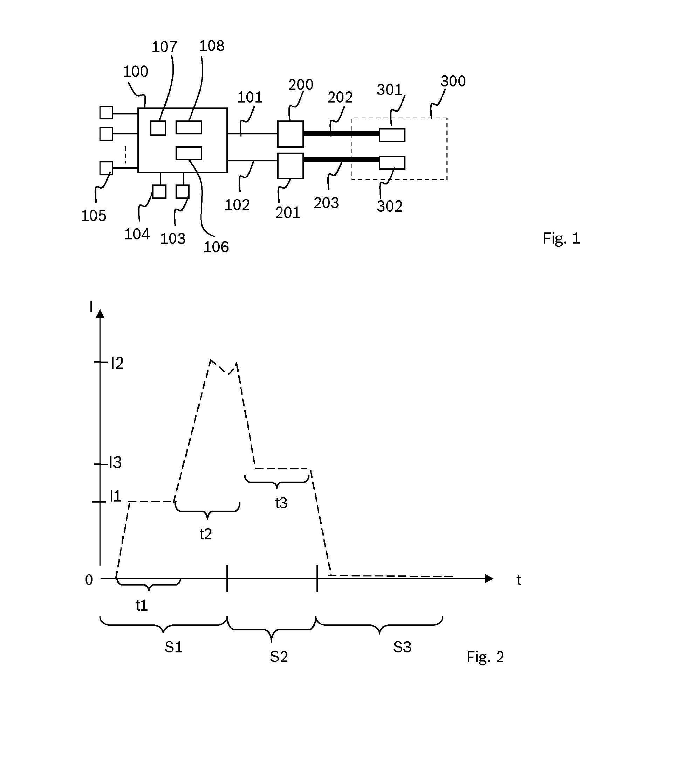

Fig. 1 shows a block diagram comprising an electronic control unit (ECU) 100. The ECU 100 is connected to a solenoid valve 200 over an electrical signal line 101. The ECU 100 is connected to a solenoid valve 201 over an electrical signal line 102. The solenoid valve 200 is connected to an intake valve 301 of an internal combustion engine 300 through an electro hydraulic system 202. The electro hydraulic system 202 is used for controlling the intake valve 301 of the internal combustion engine 300. The solenoid valve 201 is connected to an exhaust valve 302 through an electro hydraulic system 203 of the internal combustion engine 300. The electro hydraulic system 302 is used for controlling an exhaust valve of the internal combustion engine 300. The ECU 100 has various inputs and various outputs. Plurality of sensors are connected to the ECU 100 to read temperature of the ECU 100 and engine characteristics such as oil temperature, engine speed, crank angle etc. The ECU 100 has software functions such as a receiving unit 106, a thermal management unit 107, a solenoid valve control unit 108, a thermal model unit etc. In the example Fig.1 the connection is shown only for one cylinder of an internal combustion engine. In a multi-cylinder engine, there must be a number of solenoid valves which corresponds to the number of cylinders.

The internal combustion engine 300 is having a cam for controlling lift of the intake valve 301 or exhaust valve 302 by means of electro hydraulic system 202, 203. The high pressure fluid chamber is located between a pistion which is operated by the cam and the intake valve. By moving the piston with the cam the presure in the high pressure fluid chamber is increased and the intake valve starts to move against a spring therby opening the intake valve to allow the air to flow into the cylinder of the internal combustion engine 300. The soleniod valve 200 is used to controle the pressure in the high pressure fluid chamber by opening or closing the solenoid valve 200. If the solenoid valve is opened a hydraulic fluid is allowed to flow out of the high pressure fluid chamber thereby the pressure in the high pressure fluid chamber will not increase with the movement of the pistion. If the solenoid valve is not opened any increase in pressure affected by the piston movement will directly increase the openeing of the intake valve, so in this case the movement of the intake valve is directly following the movement of the pistion or the cam movement. So when the solenoid valve 200 is closed the intake valve will follow the movement of the cam and when the solenoid valve 200 is opened the intake valve will not follow the movement of the cam. So by controlling the solenoid valve the movement of the intake valve can be any movement that is within a possible maximum movement which is given by the movement of the cam. Similarly the exhaust valve 302 can also be controlled by means of the solenoid valve 201.

The solenoid valve 200, 201 consists of a coil, a plunger, an inlet port, an outlet port and an orifice. The plunger is used to open or close the orifice to allow the hydraulic fluid to flow from the inlet port to the outlet port. The inlet port is connected to the high pressure fluid chamber of the electro hydraulic system 202, 203 and outlet port is connected to an intermediate pressure chamber that is connected to a pressure accumulator of the electro hydraulic system 202, 203. Normally the plunger opens the orifice to allow the hydraulic fluid to flow out of the high pressure fluid chamber to the intermediate pressure chamber thereby the pressure in the high pressure fluid chamber will not increase with the movement of the pistion. The plunger can be closed by applying an electrical current to the coil thereby the pressure in the high pressure fluid chamber will increase with the movement of the pistion. The solenoid valve 200, 201 is connected to the ECU 100. The solenoid valve 200, 201 is of the type "normally open". The normally open type solenoid valve closes the plunger when it is energised by applying the electrical current and opens the plunger when it is de-energised. The opening and closing of the solenoid valve 200, 201 is controlled by the ECU 100.

Fig. 2 shows the electrical current pattern I (in Ampere) versus time t (in milli seconds) for opening and closing of the solenoid valve. The solenoid valve is normally open by default and this is shown in S1 period. The solenoid valve is closed by applying electrical current and this is shown in S2 period. As shown in the Fig. 2 to close the solenoid valve, the electrical current is increased from 0 ampere until the step I1 ampere for a period of time t1, which pre-magnetizes the solenoid valve but does not close the valve. The pre-magnetize phase is a magnetic field which does not have enough force to close the valve but it shorten the closing time of the valve. To close the solenoid valve full current is supplied. The electrical current is further increased for a period of time t2 to a peak current I2 to close the plunger to keep the hydraulic fluid flow from the inlet port to the outlet port. At this current step I2, the coil is completely magnetised and a strong electromagnetic field is developed around the coil. This strong electromagnetic field closes the plunger from its open position. Once the plunger is closed, to keep the plunger in the same position a smaller electrical current is sufficient. So the electrical current is decreased from the peak current to a hold current I3 to keep the plunger in closed position. The plunger is kept closed with the hold current for a period of time t3 and then opens the plunger. The solenoid valve is again opened after the time t3 and this is shown in S3 period.

The power dissipated during the phase in which the peak current is used to close the plunger is larger compared to the power dissipated during the hold current. The solenoid valves 200, 201 are actuated in each engine cycle for regulating the electro hydraulic system 202, 203 for opening or closing of the intake valve 301 and exhaust valve 302. Thus the power dissipated in the ECU 100 will be still larger. Assume an internal combustion engine 300 comprising four cylinders controlled by a four solenoid valves for opening and closing of the intake valves and four solenoid valves for opening and closing of the exhaust valves, if each solenoid valve dissipates for example X watts of power for each actuation, in sum a total of 8 times X watts of power is dissipated per engine cycle. Further the duration of the solenoid valve activation depends on the required air mass or fuel quantity in a cylinder of the internal combustion engine 300. The resulting loss of power makes much of the loss of power from the ECU 100 and may in certain operating points result in thermal problems and make an increased effort needed to cool the temperature of the ECU 100.

There are different methods by which the power dissipation can be reduced in the ECU 100 in case a predetermined condition is met. The predetermined condition is met when an actual temperature of the ECU 100 exceeds a predetermined maximum temperature of the ECU 100. The actual temperature is the temperature of the ECU 100. The maximum temperature is a predetermined temperature above which thermal problems may occur and ECU 100 may overheat and may get damaged. If the temperature of the ECU 100 is too high, it is possible to reduce the power dissipation of the ECU by one of the following methods:
a) A first method to reduce power dissipation consists of using a different electrical current pattern which realizes the same lift of the intake valve or exhaust valve but have different amount of dissipated energy. If the temperature is low a first electrical current pattern is used and if the temperature is high a second electrical current pattern is used. Both the first and second electrical current pattern realizes the same lift of the intake or exhaust valve.
b) A second method to reduce power dissipation consists of using a different electrical current pattern which realizes different lift of the intake valve or exhaust valve but the air filling in the cylinder is same. If the temperature is low a third electrical current pattern is used and if the temperature is high a fourth electrical current pattern is used. Both the third and fourth electrical current pattern realize the lift of the intake valve or exhaust valve differently but the air filling in the cylinder with the third and fourth electrical current pattern is the same.

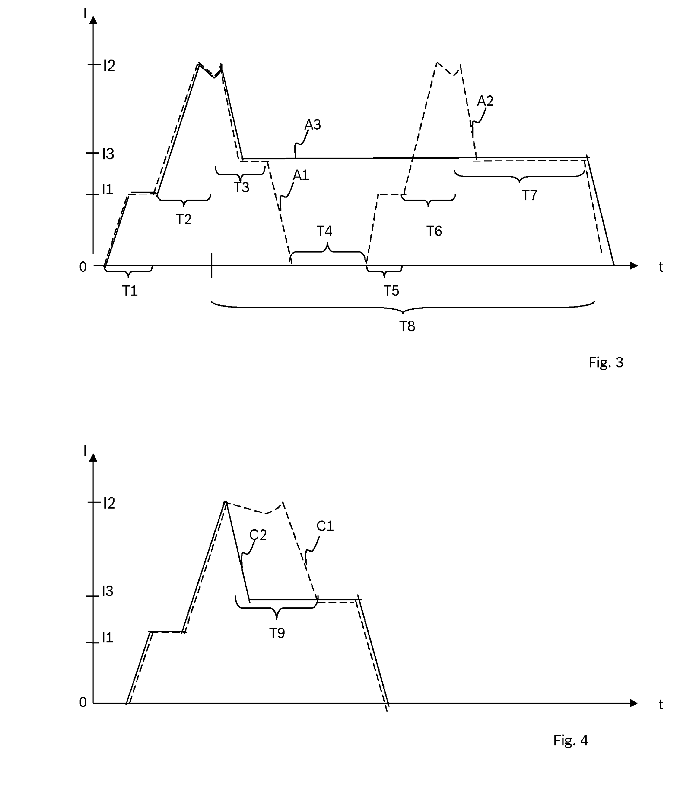

The following figures 3 and 4 describe examples of reducing power dissipation without changing the valve lift of the intake valve or the exhaust valve with the first method.

Fig. 3 shows the electrical current pattern I (in Ampere) versus time t (in milli seconds) to open and close the solenoid valve 200. The dotted lines with actuation A1 and A2 shows a normal operation of the internal combustion engine 300 if the temperature of the ECU 100 is low. The solenoid valve 200 is actuated with the first electrical current pattern A1 during an exhaust stroke and the first electrical current pattern A2 during an intake stroke. The continuous line with the second electrical current pattern A3 shows the operation of the internal combustion engine 300 with reduced power dissipation.

In a normal operation of the internal combustion engine 300, the solenoid valve 301 is actuated to control the opening and closing of the intake valve during the exhaust stroke and the intake stroke of the internal combustion engine 300. The intake valve 301 is opened during the exhaust stroke to allow exhaust gas recirculation. As shown in the Fig. 3 the electrical current is applied to the coil of the solenoid valve 200. The electrical current is increased from 0 ampere until the step I1 ampere for a period of time T1, which pre-magnetizes the solenoid valve but does not close the solenoid valve. The pre-magnetize phase is a magnetic field which does not have enough force to close the solenoid valve but it shorten the closing time of the valve. To close the solenoid valve full current is supplied. The electrical current is increased to a peak current I2 for a period of time T2. At this current step I2, the coil is completely magnetised and a strong electromagnetic field is developed around the coil. This strong electromagnetic field closes the plunger from its open position. The plunger closes the orifice and the pressure in the high pressure fluid chamber is increased. Once the plunger is closed, to keep the plunger in the same position a reduced electrical current is sufficient. So the electrical current is decreased from the peak current to a hold current I3 to keep the plunger in closed position. The plunger is kept closed with the hold current for a period of time T3 and then opens the plunger by reducing the electrical current to the coil. The intake valve 301 is opened with respect to the movement of the cam and then closed for a short time with the actuation A1. The intake valve 301 is opened again in the intake stroke of the internal combustion engine 300 by closing the solenoid valve 301 with the first electrical current pattern A2. After a time T4, the solenoid valve 301 is actuated with the first electrical current pattern A2. The electrical current is applied to the coil of the solenoid valve 200. The electrical current is again increased from 0 ampere until the step I1 ampere for a period of time T5 and then further increased to a peak current I2 for a period of time T6. At this current step I2, the coil is completely magnetised and a strong electromagnetic field is developed around the coil. This strong electromagnetic field closes the plunger from its open position. The plunger is closed the orifice and the pressure in the high pressure fluid chamber is increased. Once the plunger is closed, to keep the plunger in the same position a smaller electrical current is sufficient. So the electrical current is decreased from the peak current to a hold current I3 to keep the plunger in closed position. The plunger is kept closed with the hold current for a period of time T7 and then opens the plunger. The intake valve follows the cam movement during the intake stroke. During the period of time T4, there is no cam movement and no changes in the intake valve movement. Thus the intake valve is opened twice, once in the exhaust stroke and once in the intake stroke. Since the solenoid valve 200 is actuated twice, the power dissipation in the ECU 100 is large. The actuations A1 and A2 happen for every engine cycle of the internal combustion engine. As observed from the Fig.3 the power dissipation is generally during the peak current step I2. Since the power is directly proportional to the square of the current, power dissipation in the electronic control unit 100 is large.

If the actual temperature of the ECU 100 exceeds the maximum temperature, it is possible to reduce the power dissipation of the ECU 100 without affecting the lift of the intake valve 301. To reduce the power dissipation the electrical current pattern to the solenoid valve 200 is controlled such that plurality of closely spaced peak electrical current pulses of the first electrical current pattern A1, A2 are replaced by a pulse with reduced high current of the second electrical current pattern A3. It means that the solenoid valve 200 is actuated only once with the second electrical current pattern A3 during the exhaust stroke and continue to be closed till in the intake stroke instead of opening and closing once again as with the first electrical current pattern A1 and A2. As shown in the Fig.3, the second electrical current pattern A3 is applied to the coil of the solenoid valve 200. The electrical current is increased from 0 ampere until the step I1 ampere for a period of time T1 and then further increased to a peak current I2 for a period of time T2. At this current step I2, the coil is completely magnetised and a strong electromagnetic field is developed around the coil. This strong electromagnetic field closes the plunger from its open position. The plunger closes the orifice and the pressure in the high pressure fluid chamber is increased. Once the plunger is closed, to keep the plunger in the same position a smaller electrical current is sufficient. So the electrical current is decreased from the peak current to a hold current I3 to keep the plunger in closed position. During the exhaust stroke, the intake valve 301 is opened and closed along with the cam movement. The plunger is kept closed with the hold current for a period of time T8 and then opens the plunger. Again in the intake stroke the solenoid valve is continued with the actuation and since the cam has a movement, the intake valve follows the cam movement. With this actuation pattern A3 the peak current actuation in the interval T6 is completely removed and thus the power dissipation is reduced. During the interval T4, since there is no cam movement no changes in the intake valve movement and thus closing the solenoid valve during T4 does not affect the intake valve movement. Thus the lift of the intake valve movement with the actuation pattern A3 is similar with the actuation pattern A1 and A2. This method is useful only if the time T4 between the two actuations A1 and A2 is small so that the power dissipation in interval T4 of the electrical current pattern A3 is less than the power dissipation in interval T6 of the electrical current pattern A2.

Fig. 4 shows a further example of a first and second electrical current pattern with the same lift of the intake or exhaust valve. Fig. 4 shows the electrical current pattern I (in Ampere) versus time t (in milli seconds) for measuring a solenoid valve closing time. The dotted line shows the first electrical current pattern C1 in a normal operation. The continuous line with the second electrical current pattern C2 shows the operation with reduced power dissipation. The solenoid valve closing time is a point in time when a solenoid valve cone contacts a valve seat. For determining the solenoid valve closing time involves measuring the current in the driving stage of the solenoid and there from detecting the change in inductance that arises when the solenoid valve cone is seated. As the solenoid valve cone contacts its valve seat, the distinctive signature of an alternately dropping and rising current flow is detected. The detection of solenoid valve closing time is done in every engine cycle in normal operation. The ECU 100 monitors the electrical current pattern that actuates the solenoid valve. This provides feedback to the ECU 100 of the actual point in time when the intake valve or exhaust valve opens. The ECU 100 uses this information to regulate the solenoid valve closing time during subsequent engine cycles and to detect malfunctions of the solenoid valve. In a normal operation the solenoid valve closing time is detected such that a high level of peak electrical current for a period of time T9 is applied to the solenoid valve as shown with the first electrical current pattern C1. During this the power dissipation is large. To reduce the power dissipation of the ECU 100, if the actual temperature of the ECU 100 exceeds the maximum temperature, control the electrical current pattern to the solenoid valve 200 such that solenoid valve closing time detection is done only in alternative engine cycles. This solenoid valve closing time detection information can be reused and this will not change in a very short period, there by saving the power at the step I2 (for example 11 Amperes) and reducing the electrical current to the step I3 (for example 5 Amperes) quickly as shown with the second electrical current pattern C2.

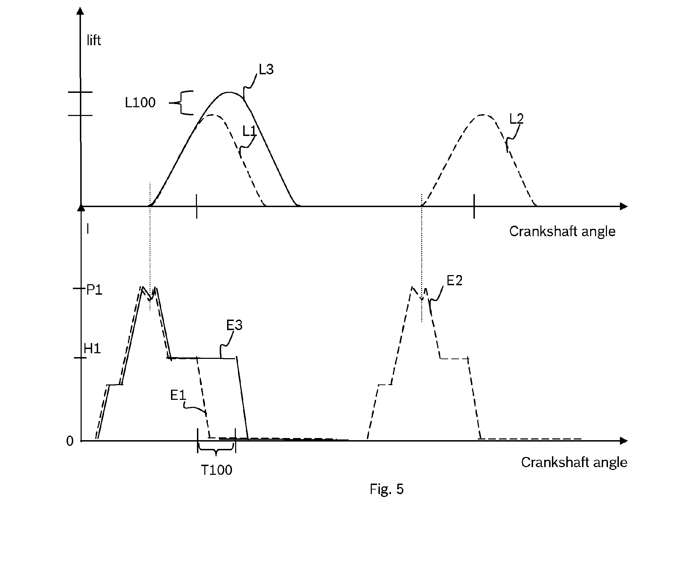

The following figures 5 to 8 describe second method of reducing power dissipation by changing lift of the intake valve 301 or the exhaust valve 302. The example is described with the intake valve 301. Similarly the exhaust valve 302 can also be controlled by means of the solenoid valve 201.

Fig. 5 shows the lift of the intake valve and corresponding electrical current pattern. The upper diagram shows lift of the intake valve relative to the crankshaft angle for a first intake valve and a second intake valve. The lower diagram shows respective electrical current pattern relative to the crankshaft angle for a first solenoid valve and a second solenoid valve. Dotted line in both the diagram shows normal operation and continuous line shows the modified operation which has reduced power dissipation. The upper diagram shows lift of the intake valve which will be explained detail in later section. The lower diagram shows electrical current pattern E1 for the first solenoid valve and the electrical current pattern E2 for the second solenoid valve. The continuous line L3 in the upper diagram shows an alternative operation in which only the first intake valve shows the lift but the second intake valve shows no lift. Respectively the continuous line E3 of the lower diagram shows only that for the first solenoid valve actuated with the electrical current pattern but no electrical current pattern is used to activate the second solenoid valve.

The two diagrams shows crankshaft angle of an internal combustion engine comprising at least two cylinders, a first cylinder and a second cylinder. The two cylinders are operated after each other so the diagram are shown the operation of the first intake valve controlled by the first solenoid valve and the operation of the second intake valve controlled by the second solenoid valve.

The lift of the intake valve and the electrical current pattern shown in the Fig. 5 is useful when the internal combustion engine is operated in a state of operation where it is useful to switch at least one cylinder OFF. That means this cylinder is not supplied with air and fuel so no combustion happens with in this cylinder. By this means it is possible to reduce the power of internal combustion engine and operate only with some of the cylinder. In a multi cylinder internal combustion engine, if some of the cylinders are switched OFF it is possible to operate the internal combustion engine with reduced number of cylinders thereby the power output of the internal combustion engine can be reduced and thereby combustion can be reduced. Since this system allows to operate with one cylinder it is possible to operate the internal combustion engine only with reduced number of cylinders and therefore the power dissipated in the ECU 100 for operating the different cylinders can be reduced. This can be used to reduce power dissipated in the ECU 100. So in certain operating mode of the internal combustion engine, it is possible to switch certain cylinders OFF to reduce power dissipated in the ECU 100.

The upper diagram shows a different lift of the intake valve pattern for the first cylinder. In a normal operation the intake valve is lifted only by the lift pattern as shown with the L1 and the lift pattern L3 shows lift of the intake valve operated with reduced power dissipation. As can be seen from the upper diagram the lift of the pattern L3 is higher than the lift of the pattern L1 by the amount L100 so the amount of the air introduced in the respective first cylinder is much higher than the normal operation. This amount of air in this first cylinder is higher and it is also possible to inject more fuel in this cylinder. So the torque output of this first cylinder is increased compared to the normal operation. The torque output from the first cylinder is increased such that it compensate for the reduced torque that is omitted from the second cylinder since the second cylinder is not operated at all. Thus internal combustion engine deliver the same torque output all though only one of the cylinder is operated. Of course this type of the operation is only possible if the cylinders are not operating with full load since the first cylinder has to compensate for the torque loss because of the second cylinder is not been operated. As can be seen from the lower diagram the complete electrical current pattern E2 is not needed as only one cylinder is operated. Since the lift of the intake valve of first cylinder has to be operated much longer, the third electrical current pattern E1 is changed to the new alternative fourth electrical current pattern E3. In the new alternative fourth electrical current pattern E3, the holding current H1 has to be extended by the time T100. But the power dissipation because of this extended holding current H1 is much lower than the power dissipation generated by the third electrical current pattern E2. So by this operation strategy in which one cylinder is switched OFF and the other one compensates the torque of the switched OFF cylinder is very effective way to reduce the amount of power dissipated in the ECU 100.

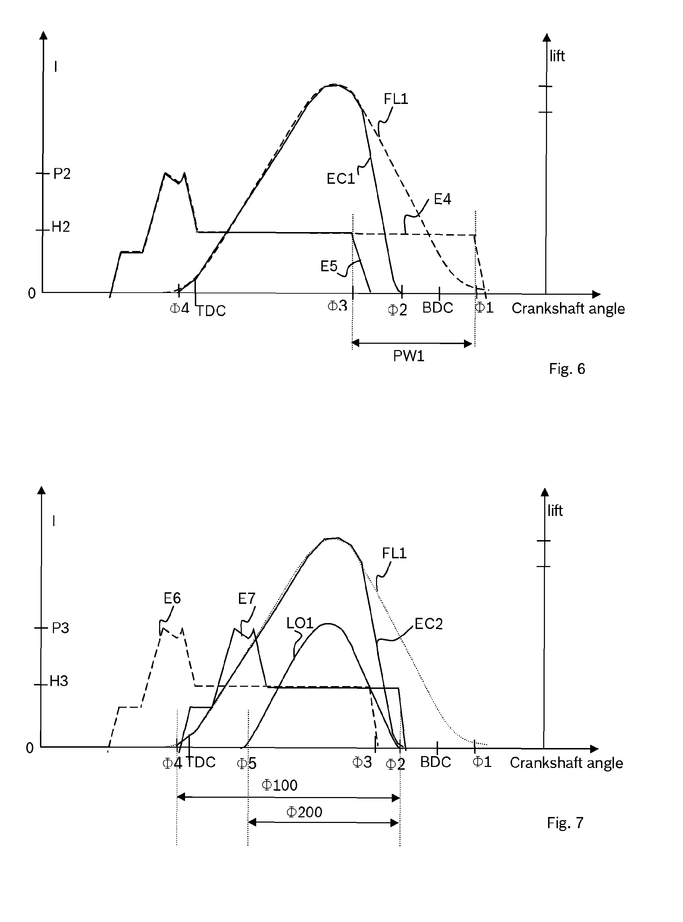

Fig. 6 shows lift of the intake valve and electrical current pattern of the solenoid valve. The X axis in the Fig. 6 represents a crankshaft angle in degrees and the Y axis represents a lift of the intake valve in millimetre or current I in Amperes. The dotted line FL1 shows the lift of the intake valve with the third electrical current pattern E4 when the temperature is low. The continuous line EC1 shows the lift of the intake valve with the fourth electrical current pattern E5 with the reduced power dissipation. Dotted line in the diagram shows normal operation and continuous line shows the modified operation which has reduced power dissipation.

In a normal operation when the temperature is low, the solenoid valve is actuated with the third electrical current pattern E4 to open a full lift of the intake valve FL1. As shown in the Fig. 6, the third electrical current pattern E4 is increased from 0 amperes to a pre-magnetised current and then to a peak current P2 to close the solenoid valve. And then the third electrical current pattern E4 is reduced to hold current H2 to keep the solenoid valve in closed position so that the intake valve follows the complete movement of the cam movement. The solenoid valve is closed beyond a bottom dead centre (BDC) of the crankshaft angle. The bottom dead center (BDC) is the position of a piston within a cylinder of the internal combustion engine when it has reached its position nearest to a crankshaft. The intake valve is opened beyond BDC of the crankshaft angle as the movement of the cam extend beyond BDC of the crankshaft angle until an angle Φ1. The Solenoid Valve is closed beyond BDC to achieve full valve opening. The complete lift of the intake valve with respect to the complete movement of the cam is called as full lift and is as shown with FL1 between crank shaft angle Φ4 and Φ1.

If the actual temperature of the ECU 100 exceeds the maximum temperature, it is possible to reduce the power dissipation of the ECU 100. To reduce the power dissipation, instead of closing the intake valve at an angle Φ1 of the crankshaft angle, the intake valve can be closed symmetrically to the angle Φ1 but before the bottom dead centre BDC of the crankshaft angle at an angle Φ2 which gives the same air filling in the cylinder. The angles Φ2 and Φ1 are placed symmetrical around the BDC, so that a piston position in the cylinder is same at these two angles. During an intake stroke of the internal combustion engine the intake valve must be open in order to let the air/fuel mixture into the cylinder. In principle the piston cannot compress the mixture until the intake valve closes. With the Full lift FL1, the intake valve stays open well into a compression stroke of the internal combustion engine. The piston moves down to a BDC and will continue moving into the cylinder past BDC. If the intake valve is opened, as the piston moves down it draw in air and as it moves up past the BDC it push back the air out which in turn have the reduced effective mixture. Instead of closing the intake valve at an angle Φ1, close the intake valve before the BDC at an angle Φ2 so the piston expand constant amount of air to a lower pressure and compress it again. Thus the amount of air in the cylinder is same whether the intake valve is closed at Φ2 or at Φ1. In order to close the intake valve at the angle Φ2, the actuation to the solenoid valve is stopped before the closing angle Φ2 of the intake valve for example at the angle Φ3. The intake valve is closed at an advanced angle of an engine crankshaft relative to the crankshaft angle at which the intake valve is closed in a conventional/fixed valve lift profile. This mode is called early intake valve closing mode. This is shown with the continuous line EC1. The fourth electrical current pattern E5 is increased from 0 amperes to a pre-magnetised current and then increased to a peak current P2 to close the solenoid valve. The fourth electrical current pattern E5 is then reduced to hold current H2 to keep the solenoid valve in closed position so that the intake valve follows the movement of the cam movement and then stop the fourth electrical current pattern E5 at an angle Φ3. At the angle Φ3, the intake valve has a movement due to a ballistic flight phase and then closes at the angle Φ2. The solenoid valve is actuated with the fourth electrical current pattern E5 and stopped the actuation at Φ3. Thus with the fourth electrical current pattern E5, the power saving is due to the current H2 during the period PW1.

Fig. 7 shows lift of the intake valve and electrical current pattern of the solenoid valve. The X axis in the Fig. 7 represents a crankshaft angle in degrees and the Y axis represents a lift of the intake valve in millimetre and a current I in Amperes. The dotted line EC2 shows the lift of the intake valve which is same as the lift of the intake valve as described in the Fig. 6 with early closing mode EC1. The continuous line LO1 shows the lift of the intake valve with the fourth electrical current pattern E7 with a reduced power dissipation. Dotted line in the diagram shows normal operation and continuous line shows the modified operation which has reduced power dissipation.

As described in the Fig. 6, if the actual temperature of the ECU 100 exceeds the maximum temperature, it is possible to reduce the power dissipation of the ECU 100 by early closing the intake valve EC1. Another way of achieving the power dissipation during high temperature condition is replacing the early closing mode EC2 by a late valve opening mode as shown with the line LO1. To reduce the power dissipation, instead of opening the intake valve at an angle Φ4 of the crankshaft angle, the intake valve can be opened at an angle Φ5 of the crankshaft angle and can be closed at the same symmetrical angle Φ2. The intake valve is opened late with respect to a top dead center (TDC) during an intake stroke of the internal combustion engine and closed before a bottom dead center (BDC) during the intake stroke of the internal combustion engine. The top dead center is the position of the piston within the cylinder of the internal combustion engine when it has reached its position farthest from the crankshaft. The intake valve then closes along with the movement of the cam movement at the angle Φ2 which gives the same air filling in the cylinder. The intake valve is opened for a period of Φ200. This is shown with the continuous line LO1. The intake valve is opened between 10 to 50 degree after the top dead center (TDC) during the intake stroke of the internal combustion engine (300). Preferably the intake valve is opened between 20 to 40 degree after the top dead center (TDC) during the intake stroke of the internal combustion engine (300). The air drawn is remain same because the amount of air in the cylinder is determined mostly by the closing time of the intake valve. If the intake valve is opened later, a piston in the cylinder generates a lower pressure and where in the speed of the piston is greater causes an increase of turbulence in the chamber and which will facilitates increase the air drawn into the cylinder. Thus the air filling is remain same whether the intake valve opens for a period Φ100 or Φ200. In order to open the intake valve at the angle Φ5 of the crankshaft angle, the fourth electrical current pattern E7 is increased from 0 amperes to a pre-magnetised current and then increased to a peak current P3 to close the solenoid valve at the angle Φ5. The fourth electrical current pattern E7 is then reduced to hold current H3 to keep the solenoid valve in closed position so that the intake valve follows the movement of the cam movement. At the angle Φ5, the intake valve has a movement with respect to the movement of the cam and follows the movement of the cam and closes at the angle Φ2. Thus with the fourth electrical current pattern E5, the power saving is due to the current H3 as the activation of the intake valve is only for a period Φ200.

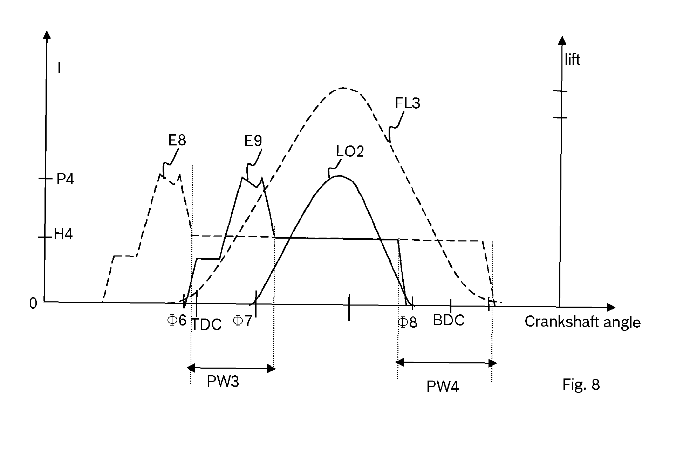

Fig. 8 shows lift of the intake valve and electrical current pattern of the solenoid valve. The X axis in the Fig. 8 represents a crankshaft angle in degrees and the Y axis represents a lift of the intake valve in millimetre and a current I in Amperes. The dotted line FL3 shows the lift of the intake valve with the third electrical current pattern E8 when the temperature is low. The continuous line LO2 shows the lift of the intake valve with the fourth electrical current pattern E9 with a reduced power dissipation. Dotted line in the diagram shows normal operation and continuous line shows the modified operation which has reduced power dissipation.

In a normal operation when the temperature is low, the solenoid valve is actuated with the third electrical current pattern E8 to open a full lift of the intake valve FL3. As shown in the Fig. 8, the third electrical current pattern E8 is increased from 0 amperes to a pre-magnetised current and then increased to a peak current P4 to close the solenoid valve. And then the third electrical current pattern E8 is reduced to hold current H4 to keep the solenoid valve in closed position so that the intake valve opens at an angle Φ6 and follows the complete movement of the cam movement. The intake valve is opened beyond a bottom dead centre BDC of the crankshaft angle as the movement of the cam extend beyond the bottom dead centre BDC of the crankshaft angle. The Solenoid Valve is closed for a longer period to achieve full valve opening. The complete lift of the intake valve with respect to the complete movement of the cam is called as full lift and is as shown with FL3.

If the actual temperature of the ECU 100 exceeds the maximum temperature, it is possible to reduce the power dissipation of the ECU 100. To reduce the power dissipation, instead of opening the intake valve at an angle Φ6 of the crankshaft angle, the intake valve can be opened at the angle Φ7 of the crankshaft angle and closed at the angle Φ8 before the BDC. Consequently, the intake valve profile is similar to the full lift mode, but with a smaller time duration. This is shown with the continuous line LO2. This mode has a combined effect as described in the Fig. 6 and Fig. 7 which enables late opening and early closing. The advantages of both the modes are used here to save the power dissipation of the ECU 100. As we know that the effect of late opening of the intake valve is that the piston in the cylinder generates a lower pressure which is below an atmospheric pressure until the intake valve opens sufficiently. Once the intake valve opens the air drawn into the cylinder is faster. Also we know the effect of closing the intake valve early which controls the trapped air go out of the cylinder. Thus the trapped air in the cylinder is remain same as with Full lift. The intake valve is opened between 10 to 50 degree after the top dead center (TDC) during the intake stroke of the internal combustion engine (300). Preferably the intake valve is opened between 20 to 40 degree after the top dead center (TDC) during the intake stroke of the internal combustion engine (300). In order to open the intake valve at the angle Φ7 of the crankshaft angle, the fourth electrical current pattern E9 is increased from 0 amperes to a pre-magnetised current and then increased to a peak current P4 to close the solenoid valve at the angle Φ7. The fourth electrical current pattern E8 is then reduced to hold current H4 to keep the solenoid valve in closed position so that the intake valve follows the movement of the cam movement. At the angle Φ7, the intake valve has a movement with respect to the movement of the cam and follows the movement of the cam. The fourth electrical current pattern E8 is then reduced to 0 amperes to open the solenoid valve so that the intake valve closes at the angle Φ8. Thus with the fourth electrical current pattern E9, the power saving is due to the current H4 during the period PW3 and PW4.

## Claims

1. A method to reduce a power dissipation of an electronic control unit (ECU) (100), wherein the electronic control unit (100) is used in an internal combustion engine (300) comprising at least one intake valve (301) or at least one exhaust valve (302) for each cylinder controlled by an electro-hydraulic system (202, 203), wherein said electro-hydraulic system (202, 203) being controlled by a solenoid valve (200, 201) for variable actuation of the intake valve (301) or exhaust valve (302), comprising the steps of:
- determining an actual temperature of the ECU (100);
- determining a predetermined maximum temperature of the ECU (100);
- determining a predetermined condition, wherein the predetermined condition is met
- when the actual temperature of the ECU (100) exceeds the predetermined maximum temperature of the ECU (100);
- if the predetermined condition is met, reduce the power dissipation of the ECU (100) by
- one of the following methods:
a) realizing a lift of the intake valve (301) or exhaust valve (302) by a first electrical
- current pattern (A1, A2, C1) if the predetermined condition is not met and a second electrical current pattern (A3, C2) if the predetermined condition is met, whereby the first and second electrical current pattern realizes the same lift of the intake or exhaust valve;
- b) realizing a lift of the intake valve (301) or exhaust valve (302) by a third electrical current pattern (E1, E2, E4, E6, E8) if the predetermined condition is not met and a fourth electrical current pattern (E3, E5, E7, E9) if the predetermined condition is met, whereby the third and fourth electrical current pattern realizes the lift of the intake valve or exhaust valve differently but the air filling in the cylinder with the third and fourth electrical current pattern is the same.

2. The method according to the claim 1, wherein the electrical current pattern to the solenoid valve is controlled such that plurality of closely spaced peak electrical current pulses of first electrical current pattern (A1, A2) are replaced by a pulse with reduced peak of the second electrical current pattern (A3).

3. The method according to the claim 1, wherein the electrical current pattern to the solenoid valve is controlled by the second electrical current pattern (C2) such that the solenoid valve closing time is read not every time but at alternate engine cycles or every third engine cycle or even more seldom.

4. The method according to the claim 1, wherein the lift of the intake valve (301) or exhaust valve (302) is realized in a multi cylinder engine when the engine is in a low load running mode by means of solenoid valve (200, 201), wherein the cylinders of the multi cylinder engine is split into two group, the first group being operated with the fourth electrical current pattern (E3) such that an amount of torque is increased and the second group is not operated with the electrical current pattern but the amount of torque in the first group is same as that of the first and second group with the third (E1, E2) and fourth electrical current pattern (E3).

5. The method according to the claim 1, wherein the solenoid valve (200) is controlled with the fourth electrical current pattern (E5) such that the intake valve (301) is closed before a bottom dead center (BDC) during an intake stroke of said internal combustion engine.

6. The method according to the claim 1, wherein the solenoid valve (200) is controlled with the fourth electrical current pattern (E7, E9) such that the intake valve is opened late with respect to a top dead center (TDC) during an intake stroke of said internal combustion engine and closed before a bottom dead center (BDC) during the intake stroke of said internal combustion engine.

7. The method according to the claim 6, wherein for late opening the intake valve (301) of said internal combustion engine (300) is opened between 10 to 50 degree after the top dead center (TDC) during the intake stroke of the internal combustion engine (300).

8. The method according to the claim 6, wherein for late opening the intake valve (301) of said internal combustion engine (300) is opened preferably between 20 to 40 degree after the top dead center (TDC) during the intake stroke of the internal combustion engine (300).

9. An electronic control unit (ECU) (100) for use in an internal combustion engine (300) comprising at least one intake valve (301) or at least one exhaust valve (302) for each cylinder controlled by an electro-hydraulic system (202, 203), wherein said electro-hydraulic system (202, 203) being controlled by a solenoid valve (200, 201) for variable actuation of the intake valve (301) or exhaust valve (302), to reduce a power dissipation of the ECU (100) comprising:
- means for determining an actual temperature of the ECU (100);
- means for determining a predetermined maximum temperature of the ECU (100);
- means for determining a predetermined condition, wherein the predetermined
- condition is met when the actual temperature of the ECU (100) exceeds the predetermined maximum temperature of the ECU (100);
- if the predetermined condition is met, reduce the power dissipation of the ECU (100) by one of the following means:
a) means for realizing a lift of the intake valve (301) or exhaust valve (302) by a first electrical current pattern (A1, A2, C1) if the predetermined condition is not met and a second electrical current pattern (A3, C2) if the condition is met, whereby the first and second electrical current pattern realizes the same lift of the intake or exhaust valve;
b) means for realizing a lift of the intake valve or exhaust valve by a third electrical current pattern (E1, E2, E4, E6, E8) if the predetermined condition is not met and a fourth electrical current pattern (E3, E5, E7, E9) if the predetermined condition is met, whereby the third and fourth electrical current pattern realizes the lift of the intake valve or exhaust valve differently but the air filling in the cylinder with the third and fourth electrical current pattern is the same.
